# EUROPEAN PATENT APPLICATION

(11) **EP 0 762 162 A1**
(43) Date of publication of application: **12.03.1997**
(21) Application number: 96306093.4
(22) Date of filing: 21.08.1996
(51) Int. Cl.: G02B 6/30

(54) **Article comprising fiber-to-planar waveguide coupling and method of making the article**

(30) Priority: 31.08.1995 US 521936
(71) Applicant: AT&T Corp., New York, NY 10013-2412 (US)
(72) Inventor: Cappuzzo, Mark Anthony, Linden, New Jersey 07036 (US); Laskowski, Edward John, Scotch Plains, New Jersey 07076 (US); Scotti, Ronald Edward, White House Station, New Jersey 08889 (US); Shmulovich, Joseph, Murray Hill, New Jersey 07974 (US)
(74) Representative: Johnston, Kenneth Graham

(57) **Abstract**

The invention is a fiber-to-planar waveguide coupling device and method for making such device in which a single mask (56) forms and laterally aligns both the waveguide core (18) and the fiber V-groove during (24) the same manufacturing process. The device is made by forming initially a lower cladding layer (16) on or within a silicon wafer substrate (14) in a conventional manner and then uniformly depositing a core glass layer (52) thereon so that the differential between the two surfaces remains minimal. A single mask having laterally aligned waveguide and V-groove portions is then used in patterning the core glass layer (52) to form the waveguide core (18) and to define the location of the V-groove. The V-groove is then formed completely using conventional etching techniques. An upper cladding is formed over the waveguide core and a partial saw cut is made between the V-groove and the waveguide core to better accommodate the coupling optical fiber. Because a single mask is used to define the locations of the waveguide and the V-groove, the accuracy of their lateral alignment is easily assured. Also, because the vertical relationship between the wafer surface and the top surface of the lower cladding is known or can be determined conventionally, vertical alignment between the waveguide core and the core of an optical fiber positioned within the V-groove is not compromised.

## Description

### 1. Field of the Invention

The invention relates to devices for coupling optical power. More particularly, the invention relates to devices for fiber-to-planar waveguide coupling and methods for making such devices.

### 2. Discussion of Background

Optical components, both active and passive, were constructed traditionally using fused fiber technology or micro-optic technology. Such active components include amplifiers, lasers, switches, modulators and the like. Such passive optical components include wavelength division multiplexers (WDM), demultiplexers, interferometers, filters, couplers, splitters, combiners and the like. The components were often hand-made and therefore expensive to produce. In an effort to fabricate these optical components within a low cost, mass production environment, production methods were adopted similar to those used for fabricating silicon-based integrated circuit components in the silicon integrated circuit industry. Such adopted technology is sometimes referred to as silica-on-silicon integrated optics technology.

In this technology, glass films of proper refractive index are deposited and patterned on silicon substrates to form planar waveguides. Using planar waveguides, passive optical devices comparable in performance to devices made utilizing fiber optic techniques have been demonstrated. However, the planar optical devices still had to be coupled to an optical fiber in order to be used in communication networks.

Silicon V-grooves are frequently used for positioning and attaching optical fibers to planar optical circuits because they provide good control in fiber position and are compatible in thermal expansion with silicon. Previously, a method for coupling optical fiber to a planar waveguide was disclosed in which the V-groove was etched on the same silicon substrate as that of the planar waveguide.

Specifically, V-grooves and waveguides were integrated on the same substrate using a first mask and a KOH/isopropyl alcohol (IPA) based wet etchant for forming precisely defined V-grooves in the silicon substrate and a second mask and a Reactive Ion Etching (RIE) technique to define channel waveguides in layers deposited by Plasma Enhanced Chemical Vapour Deposition (PECVD). The refractive index was controlled using either fluoride doping to lower the refractive index or phosphorus doping to raise the refractive index. The endfaces of the waveguides were prepared using a standard dicing saw.

Also, in a similar silica-on-silicon fabrication process, one mask was used for precisely defining the V-grooves in the silicon substrate while another mask was used for forming the waveguide layers. However, the fabrication methods mentioned above use separate masks for forming the waveguides and the V-grooves, contributing to inaccurate alignment, especially lateral alignment, between the waveguide core and the core of an optical fiber positioned within the V-groove.

In silica-on-silicon technology, the core layer is deposited on top of a relatively thick (typically 15-25 µm) glass layer, called a lower cladding, that optically isolates the light propagating in the waveguide core from the silicon substrate. The use of separate masks for patterning the waveguides and V-grooves stems from the difficulty in focusing patterns simultaneously at the top of the cladding, to expose waveguides, and at the bottom of the cladding (the silicon level), to expose the V-groove patterns. Another difficulty stems from exposing resist and other masking materials across such large surface differentials.

Because of these previous vertical alignment difficulties, the development of such fabrication methods has focused on using separate masks for forming waveguides and V-grooves and methods for improving the vertical alignment accuracy between waveguides and V-grooves.

There exists a need for fabricating silica-on-silicon optical components suitable for mass production with improved lateral alignment accuracy beyond that of current processes without sacrificing the vertical alignment accuracy of current processes.

### Summary Of The Invention

The invention is as defined by the claims. According to its major aspects and broadly stated, the invention is a method and device for coupling optical components with improved alignment accuracy. More particularly, the invention is a fiber-to-planar waveguide coupling device and method for making such device in which a single mask forms and laterally aligns both the waveguide core and the fiber V-groove during the same manufacturing process. The device is made by forming initially a lower cladding layer on or within a silicon wafer substrate in a conventional manner and then uniformly depositing a core glass layer thereon so that the differential between the two surfaces remains minimal. A single mask having laterally aligned waveguide and V-groove portions is then used in patterning the core glass layer to form the waveguide core and to define the location of the V-groove. The V-groove is then formed completely using conventional etching techniques. An upper cladding is formed over the waveguide core and a partial saw cut is made between the V-groove and the waveguide core to better accommodate the coupling optical fiber. Because a single mask is used to define the locations of the waveguide and the V-groove, the accuracy of their lateral alignment is easily assured. Also, because the vertical relationship between the wafer surface and the top surface of the lower cladding is known or can be determined conventionally, vertical alignment between the waveguide core and the core of an optical fiber positioned within the V-groove is not compromised.

### Brief Description Of The Drawings

FIG. 1 is a partial cross-section, perspective view of a coupling arrangement of the fiber to the waveguide according to one embodiment of the invention;
FIG. 2 is a perspective view of the silicon wafer used in the fiber-waveguide coupling of FIG. 1 after formation of the shallow bed;
FIG. 3 is a partial cross-section, perspective view of the wafer in FIG. 2 after deposition of the lower cladding and showing the planar relationship between the lower cladding and the wafer surface;
FIG. 4 is a partial cross-section, perspective view of the coupling arrangement of FIG. 1 showing the deposition of the core glass layer on the wafer surface and the mask positioned on the core glass layer;
FIG. 5 is a partial cross-section, perspective view of the coupling arrangement of FIG. 1 showing the waveguide core and the core glass layer defining the V-groove;
FIG. 6a is a perspective view of the coupling arrangement of FIG. 1 showing the addition of the upper cladding of the device;
FIG. 6b is a partial cross-section, perspective view of the coupling arrangement of FIG. 1 showing the partial removal of the upper cladding;
FIG. 7a is a perspective view of the coupling arrangement of FIG. 1 showing one of the partial saw cuts;
FIG. 7b is a perspective view of the coupling arrangement of FIG. 1 after removing the end of the V-groove and showing the positioning of the optical fiber in the V-groove;
FIG. 8a is a perspective view of the coupling arrangement according to an alternative embodiment showing the deposition of the core glass layer on the wafer surface and the mask positioned on the core glass layer;
FIG. 8b is a perspective view of the coupling arrangement of FIG. 8a after uniform etching of the V-groove region;
FIG. 8c is a perspective view of the coupling arrangement of FIG. 8a upon completion;
FIG.9a is a perspective view of the coupling arrangement according to yet another embodiment showing the trenches defined in the lower cladding;
FIG. 9b is a perspective view of the coupling arrangement of FIG. 9a after uniform etching of the V-groove region; and
FIG. 9c is a perspective view of the coupling arrangement of FIG. 9a upon completion.

### Detailed Description

In the following description similar components are referred to by the same reference numeral in order to simplify the sequential aspect of the drawings.

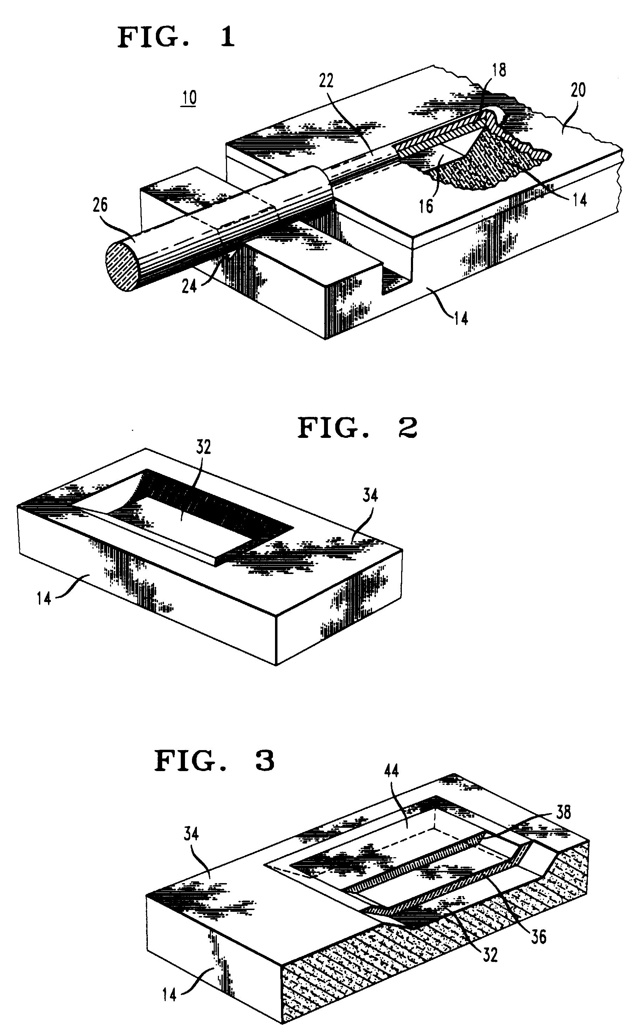

Referring to FIG. 1, a perspective view of one embodiment of a coupling arrangement 10 is shown. Formed within one side of a wafer substrate 14 is a lower cladding layer 16, a core or core layer 18 and an upper cladding layer 20, all of which collectively define the waveguide (shown generally as 22). Formed within the opposing side of wafer 14 is a V-groove 24 dimensioned to hold an optical fiber 26 at a desired lateral and vertical position with respect to waveguide core 18. Between V-groove 24 and waveguide 22, a portion of wafer 14 is removed to better accommodate the positioning of optical fiber 26 and its alignment with waveguide core 18.

In optical coupling arrangements, it is important that optical fiber 26 and waveguide core 18 be aligned both vertically and laterally (horizontally) for maximum coupling efficiency. As will be set forth in greater detail below, by being vertically aligned it is meant that the longitudinal axis of waveguide core 18 and the axis of fiber 26 when the latter is positioned in V-groove 24 are in the same horizontal plane. Similarly, by being laterally (or horizontally) aligned, it is meant that the longitudinal axis of waveguide core 18 is in the vertical plane of symmetry of V-groove 24.

Referring now to FIGS. 2-7, the embodiment shown in FIG. 1 begins with a silicon wafer substrate 14 or other suitable material. As shown in FIG. 2, a shallow bed (shown as 32) is formed within the top surface 34 of wafer 14 using a suitable technique known in the art, e.g., etching. Bed 32 is formed generally as a U-shaped channel with slanted rather than vertical walls.

Once bed 32 has been formed, lower cladding 16 is grown or deposited within bed 32 by any conventional technique known in the art, such as by high pressure oxidation (HIPOX), chemical vapor deposition (CVD), sol-gel, sputtering, e-beam evaporation and the like. Typically, lower cladding 16 is undoped silicon dioxide (SiO2) or silicon dioxide doped with one or more elements such as boron (B), fluorine (F), phosphorus (P), germanium (Ge) and the like. The actual concentration of the dopants depends on thermal expansion, refractive index, stabilization and other considerations. However, such is known or can be determined readily by those skilled in the art.

In this embodiment, it is suitable for lower cladding 16 to be a single glass layer or, as shown in FIG. 3, a pair of glass layers 36, 38 that completely fills bed 32. For example, for a wafer 14 having a typical thickness of approximately 20-28 millimeters, the lower cladding can be a lower layer 36 of silicon dioxide having a thickness of approximately 10-20 microns and an upper layer 38 of 2% phosphorus-doped silicon dioxide having a thickness of approximately 5-10 microns.

Once formed on wafer 14, the lower cladding is polished so that, as shown in FIG. 3, a top surface 44 of the lower cladding is planar with top surface 34 of wafer 14. By planar it is meant that the height differential between surface 34 and surface 44 is within an acceptable tolerance for the given arrangement. For this embodiment, and in most coupling arrangements, an acceptable tolerance is within 5 microns. Therefore, for purposes of discussion in this description, the term "planar" is understood to be within this acceptable tolerance.

The planarizing step just described has to assure that the subsequently formed waveguide and V-groove are to be simultaneously in focus of the lithography system used to define their patterns. As just stated, in most cases, this height differential has to be less than approximately 5 microns. From a fiber-waveguide vertical alignment point of view, the height difference between surfaces 34 and 44 is vertically compensated for during subsequent formation of V-groove 24 by adjusting its width, as will be explained in greater detail below.

Alternatively, the planarizing step is performed after the glass layer is deposited on the top surface 34 of wafer 14 in addition to within bed 32. That is, the glass is etched away from the top surface 34 of wafer 14 and the glass in bed 32 until the two surfaces are planar. In this manner, the top surface 34 of wafer 14 is etched first, then, if necessary, the glass in the bed 32 is etched to a point in which its top surface 44 is planar with top surface 34 of wafer 14.

Although in this particular embodiment the lower cladding layer is formed within substrate 14, such is not necessary in this invention. That is, the lower cladding can be formed in or on substrate 14 and, for purposes of discussion in this description, the term "carried by" will be understood to represent either relationship. Furthermore, it should be understood that the term "carried by" represents any situation herein in which a layer of a first material can be formed on or within a layer of a second material.

As mentioned previously, the glass in bed 32 functions as the lower cladding 16 for waveguide core 18 (see FIG. 1), i.e., waveguide core 18 is formed directly on lower cladding 16. Also, V-groove 24 is formed a known depth from surface 34 at a location adjacent to the bed 32 of glass. Thus, having surfaces 34 and 44 planar with respect to one another becomes important later in terms of vertical alignment between optical fiber 26 and waveguide core 18.

As will be discussed later, conventional methods exist for dimensioning the V-groove so that the vertical position of an optical fiber positioned therein with respect to the top plane of the V-groove is known or can be determined with a high degree of accuracy. Similarly, the relative vertical position of waveguide core 18 with respect to the top plane of lower cladding 16 (top surface 44 of the glass in bed 32) can be determined through accurate measurement of waveguide core 18. Thus, when surfaces 34 and 44 are planar or their relative vertical positions are otherwise determinable with respect to one another (i.e., when a determinable vertical relationship is established therebetween), precise vertical alignment of the waveguide and the optical fiber is possible.

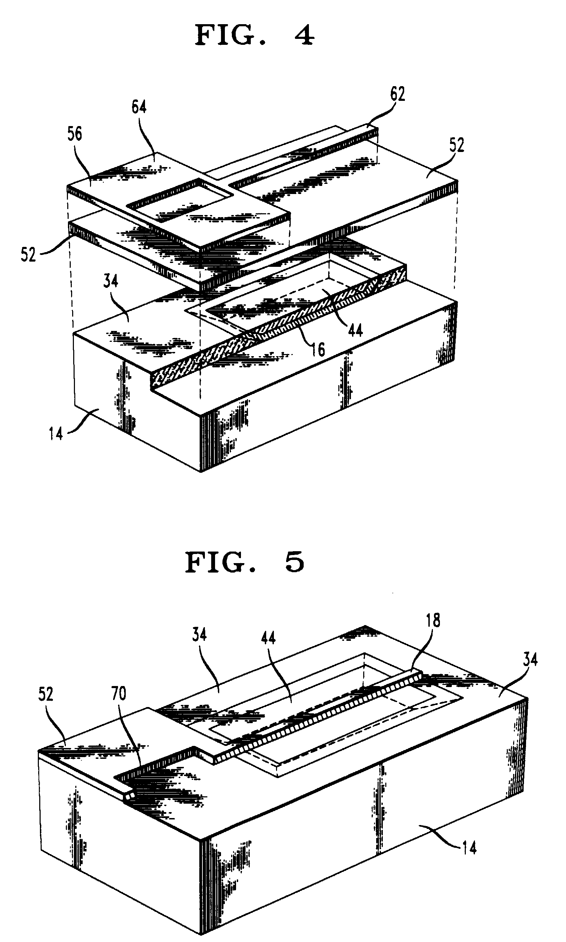

Referring now to FIGS. 4 and 5, after lower cladding 16 has been formed within wafer 14 and their respective surfaces made planar, a core glass layer 52 is formed on both surfaces using any technique known in the art. Typically, core glass layer 52 is made of silicon dioxide doped with one or more of the following: phosphorus (P), germanium (Ge), aluminum (Al), titanium (Ti), tantalum (Ta), arsenic (As), erbium (Er) and the like. As is well known in the art, the various dopant concentrations are determined based on considerations such as index of refraction, the solubility of rare earth metals (e.g., erbium), and low temperature processing or thermal expansion.

Core glass layer 52 is deposited using any one of a variety of techniques known in the art, including but not limited to chemical vapor deposition (CVD), flame hydrolysis, sol-gel, sputtering, e-beam evaporation and the like. As discussed above, depositing core glass layer 52 to a desired thickness within precise tolerances is known to those skilled in the art.

After core glass layer 52 is formed, a single mask 56 is used to pattern core glass layer 52 in a manner well known in the art. Typically, an appropriate etching technique (e.g. wet etching, reactive ion etching, ion milling) is chosen for patterning the core layer based on its composition and the manner in which the core layer was deposited.

It is important to note that the locations of both the waveguide core and the V-groove are defined by a single mask. In this manner the invention is advantageous because the waveguide core and the V-groove are laterally aligned or centered with respect to each other much more accurately than in prior art techniques. For purposes of discussion in this description, the terms "lateral alignment" or "horizontal alignment" are understood to mean that the longitudinal axis of the waveguide core is in the vertical plane of symmetry of the V-groove within acceptable tolerances as defined by the accuracy of the mask fabrication technique.

As discussed previously, prior art methods use a first mask for defining the waveguide and a subsequent mask for defining the V-groove during a later process step, thus an error in lateral alignment between the two masks is always present. It is believed that the use of a single mask for defining the waveguide core and the V-groove has not been explored in prior art methods because, until recently, it has not been possible to reliably produce planar relationships between lower cladding and wafer surfaces.

Referring again to FIGS. 4-5, once mask 56 is positioned on wafer 14 as shown generally in FIG. 4, waveguide core 18 is produced by etching away or otherwise removing those portions of core glass layer 52 not covered by a first portion 62 of mask 56 (see FIGS. 4-5). Also, the rectangular region of core glass layer 52 not covered by a second portion 64 of mask 56 is etched away to define the location and boundaries of V-groove 24. That is, the region of core glass layer 52 protected by second portion 64 of mask 56 is used subsequently in patterning V-groove 24 from wafer 14.

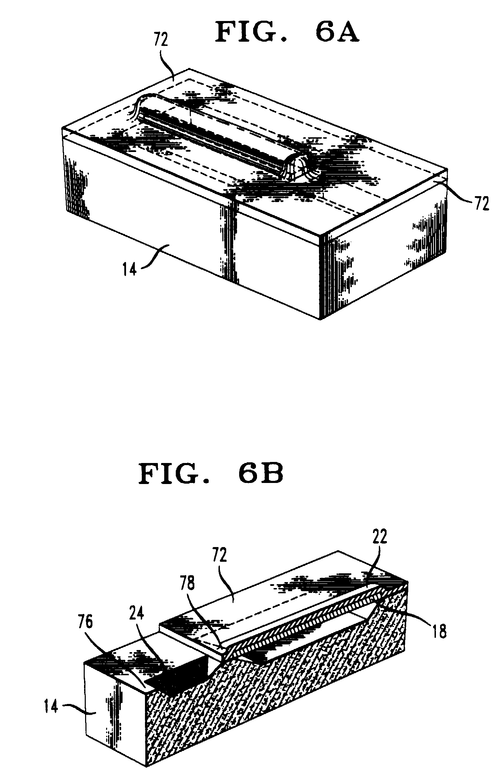

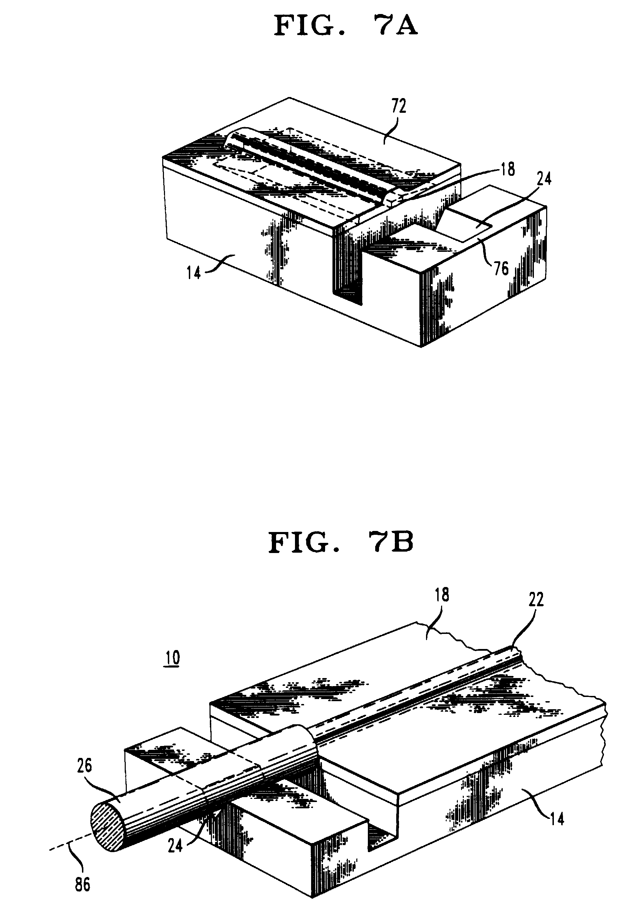

Upon completion of removing the appropriate areas of core glass layer 52, mask 56 is removed from wafer 14. Then, V-groove 24 is formed from the region of wafer 14 defined by the rectangular region 70 of core glass layer 52 shown partially in FIG. 5. Using conventional etching techniques, V-groove 24 is patterned as a V-shaped channel with slanted walls, as shown best in FIGS. 6b, 7a and 7b.

Prior to actually forming V-groove 24 from wafer 14, the preferred width (and depth) is determined so that, when an optical fiber of known dimensions is positioned within V-groove 24, the core of the optical fiber will be vertically aligned with waveguide core 18. Such alignment is based on the diameter of the optical fiber to be positioned within V-groove 24 and is possible because, as described previously, the waveguide core has a determinable vertical relationship with respect to surface 44 of lower cladding 16. In this manner, the accuracy of the vertical position of the core of the optical fiber positioned in V-groove 24 with respect to waveguide core layer 52 is disrupted only by optical fiber diameter variation, which is in the range of approximately ± 0.2 µm.

Referring now to FIG. 6a, once V-groove 24 is formed completely, an upper cladding layer 72 is deposited on all areas of wafer 14 using a known technique such as chemical vapor deposition (CVD), sol-gel, sputtering, e-beam evaporation and the like. As shown, upper cladding layer 72 covers lower cladding layer 16, waveguide core 18 and V-groove 24. Upper cladding 72 is made of any suitable material known in the art. Such materials include undoped silicon dioxide and silicon dioxide doped by any one or more of boron (B), phosphorus (P), germanium (Ge) and the like. It is within the knowledge of one skilled in the art to determine the material composition of upper cladding layer based on the particular refractive index of waveguide core layer 52 along with other considerations such as thermal expansion, stabilization and the like.

Then, as shown in FIG. 6b, the portion of upper cladding layer 72 above V-groove 24 is removed by suitable means. For example, such portion can be removed by positioning a mask over the waveguide region and removing the exposed portion of upper cladding layer 72 by a buffered oxide etch (BOE) or other conventional method known in the art. Upon completion of this removal, however, there remain portions (shown generally as 76, 78) of substrate 14 and upper cladding 72 that prevent an optical fiber from being positioned adjacent to waveguide core 18.

Therefore, section 78 is removed using a partial saw cut as shown in FIG. 7a. The partial saw cut actually dices off a small portion of the end of waveguide core 18, thereby producing an acceptable end for coupling of the fiber. In many applications, an index matching gel is applied between the end of waveguide core and the fiber to improve the coupling efficiency and to avoid reflections.

Finally, section 76 is diced away using a second partial saw cut, thereby allowing an optical fiber 26 of known diameter and core location to be positioned within V-groove 24 (as shown in FIG. 7b). As discussed above, optical fiber 26 is positioned within V-groove 24 so that the core 86 of optical fiber 26 is aligned both laterally and vertically with waveguide core 18.

Although the exemplary embodiment described above makes use of a planar relationship between the top surface of the lower cladding of the waveguide and the top plane of the V-groove, the scope of the invention is applicable to any waveguide coupling arrangement in which there exists a determinable vertical relationship between a waveguide surface and a V-groove surface. By use of the term "determinable vertical relationship" in this description, it is meant any arrangement whereby a waveguide surface and a V-groove surface are planar or any difference therebetween is known or can be determined using conventional techniques to within acceptable tolerances for the given arrangement. For example, as discussed previously, surfaces 34 and 44 are said to be planar if they are within 5 microns of each other. In this regard, waveguide surfaces include the upper surface of the lower cladding layer and the upper surface of the waveguide core layer. V-groove surfaces include the upper and lower planes of a V-groove.

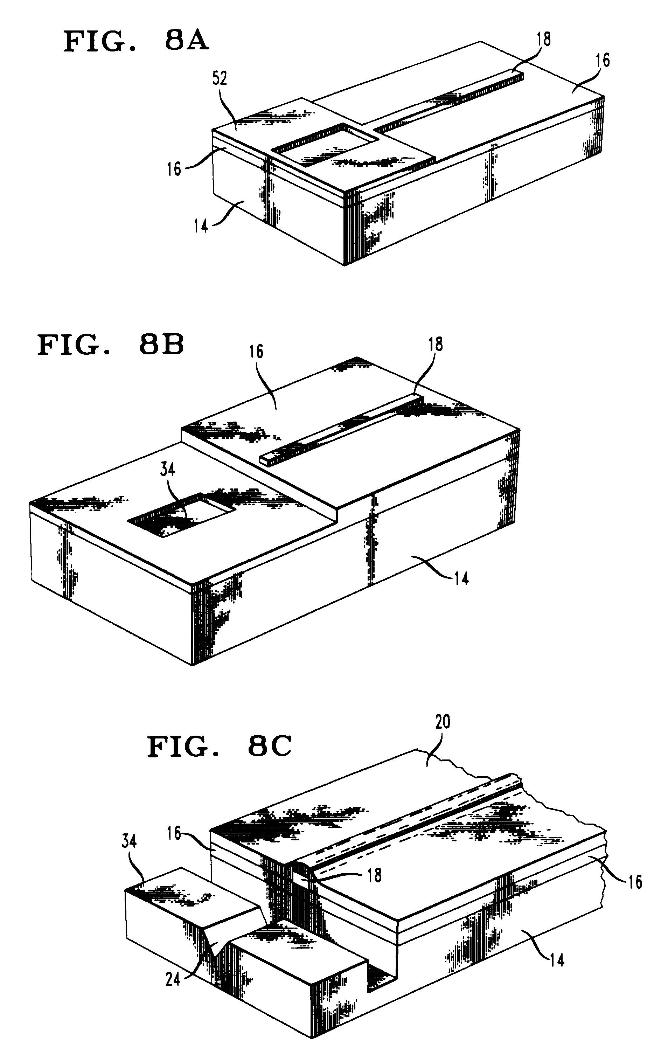

Referring now to FIGS. 8a-8c, in a second embodiment of the invention, lower cladding layer 16 is formed on top of substrate 14, rather than within a portion of substrate 14. A single mask (e.g., mask 56 shown in FIG. 4) is used to define and laterally align both the waveguide core 18 and a portion of the V-groove opening from core layer 52, as shown in FIG. 8a. Then, the waveguide region is protected while the portions of core layer 52 and lower cladding layer 16 in the V-groove region are etched uniformly until, as shown in FIG. 8b, top surface 34 of wafer 14 is exposed. In this manner, the uniform thickness differential originally established (as shown in FIG. 8a) is maintained and defines the V-groove for subsequent formation thereof from at least a portion of substrate 14. This thickness differential has to be smaller than the optical depth of field of the photolithography system used in patterning the V-groove and waveguide, to allow for sharp, simultaneous definition of both the V-groove and the waveguide regions.

Once V-groove 24 is formed completely, as shown in FIG. 8c and discussed previously, upper cladding 20 is uniformly deposited at least over the waveguide region of the wafer. The removal of any upper cladding material (as discussed previously) and core material from the V-groove region, followed by a saw cut for fiber 26, finishes the process (see FIG. 8c).

In this particular embodiment, the top plane of the waveguide and the top plane of the V-groove are not planar, however, their vertical positions with respect to one another are known or can be determined with a high degree of accuracy using conventional methods (i.e., they have a determinable vertical relationship with respect to one another). Therefore, the V-groove width can be adjusted as is known in the art to insure accurate vertical alignment of the fiber and waveguide core.

In a variation of this embodiment, in the initial step, the lower cladding in the V-groove region is etched partially rather than completely, so as to decrease the amount of the core glass layer there and to allow easier exposure of silicon in the subsequent V-groove etch step. However, the uniform thickness differential established by the initial etching still has to be smaller than the optical depth of field of the photolithography system used in patterning the V-groove and waveguide, to allow for sharp, simultaneous definition of both the V-groove and the waveguide regions.

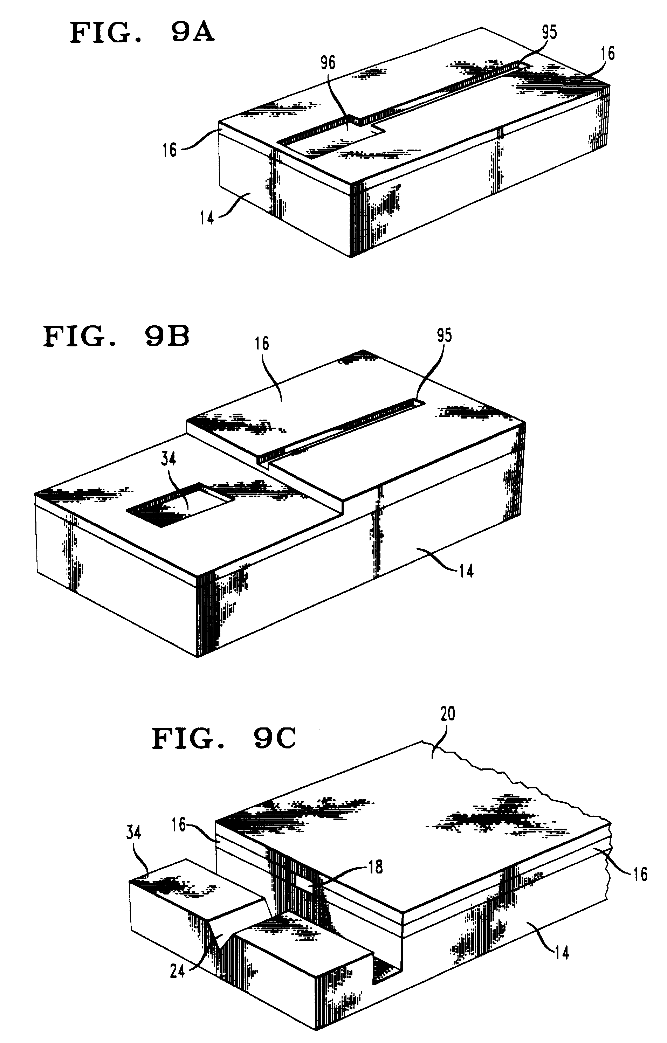

In yet another embodiment (shown in FIGS. 9a-9c), a single mask defining the V-groove and the waveguide is used to etch laterally aligned troughs of desired dimensions in the lower cladding layer. The trough in the waveguide region is used to form a waveguide embedded therein and the trough in the V-groove region is used to define a V-groove in a manner that maintains the determinable vertical relationship of the V-groove with respect to the waveguide.

In this embodiment, initially a lower cladding layer 16 is formed on substrate 14. Next, a single mask (e.g. mask 56 shown in FIG. 4) defining both the waveguide and the V-groove locations is used to etch laterally aligned troughs 95, 96 into lower cladding layer 16 (see FIG. 9a). As will be discussed below, trough 95 in the waveguide region is later filled with waveguide core layer material so that, when formed, waveguide core 18 is embedded in lower cladding layer 16.

Next, the entire waveguide region (i.e., the region in which trough 95 resides) is protected and the initially defined V-groove region (i.e., the region in which trough 96 resides) is uniformly etched to a point where the V-groove window is open to silicon, as shown in FIG. 9b. The uniform etching preserves the initially defined thickness differential of trough 96 and the remaining portion of lower cladding 16 defines the V-groove for subsequent formation thereof.

V-groove 24 is formed completely as described in previous embodiments. Also, as before, the determinable vertical position of the waveguide relative to the silicon surface enables calculation and fabrication of the V-groove width that insures the vertical alignment of the fiber and waveguide cores. Then, the core layer is deposited so that it fills trough 95 and the excess core material is removed using conventional etching techniques. An upper cladding layer 20 is deposited over the surfaces and, as can be seen in FIG. 9c, any unwanted upper cladding or core material in the V-groove region is removed, e.g., by appropriate wet etch of silicon dioxide such as buffered oxide etch. Finally, partial saw cuts are made as described in previous embodiments.

It will be apparent to those skilled in the art that many changes and substitutions can be made to an exemplary embodiment herein described without departing from the spirit and scope of the invention as defined by the appended claims. For example, although the description herein refers to only silicon dioxide-based glasses, the invention is suitable for use with any and all glasses known for use in forming waveguide cores and cladding layers in waveguides. Such glass materials include high silica glasses, multicomponent glasses such as silicate glasses, phosphate glasses and fluoride glasses, and the like. Also, it is within the scope of the this invention to use any suitable means for vertically aligning an optical fiber with a waveguide instead of the V-grooves described herein.

## Claims

1. A method for making an optical device, said method comprising the steps of:
forming a lower cladding (16) on at least a portion of a substrate (14) whereby said lower cladding is carried by said substrate and whereby said lower cladding has a determinable vertical relationship with said substrate;
forming a core layer (52) so that at least a portion thereof is carried by said lower cladding;
patterning at least a portion of said core layer using a mask (56) thereby forming a waveguide core (18) and defining a region (70) laterally aligned therewith for vertically aligning an optical fiber (26) with said core layer;
forming said vertically aligning region from a portion of said substrate whereby a determinable vertical relationship is established between said vertically aligning region and said substrate so that, when said optical fiber is positioned by said vertically aligning region, said optical fiber is laterally and vertically aligned with said waveguide core; and
forming an upper cladding (20) on said waveguide core thereby forming a waveguide.

2. The method as recited in claim 1, wherein said core layer has a first region associated with said waveguide core and a second region associated with said vertically aligning means, and wherein said patterning step further comprises the steps of:
positioning a mask on said core layer;
etching said core layer in said first region not protected by said mask whereby said waveguide core is formed; and
etching said core layer in said second region not protected by said mask whereby the location of said vertically aligning means is defined in said core layer.

3. The method as recited in claim 2, wherein said etching step in said second region of said core layer further comprises the step of etching said core layer in said second region not protected by said mask whereby the location of a V-groove is defined.

4. The method as recited in claim 1, wherein each of said substrate and said lower cladding has a surface and wherein said lower cladding forming step further comprises forming said lower cladding within said substrate so that said lower cladding surface is planar with respect to at least a portion of said substrate surface.

5. The method as recited in claim 1, further comprising the step of removing at least one portion of said substrate so that, when an optical fiber is positioned by said vertically aligning means, said optical fiber is laterally and vertically aligned with said waveguide core.

6. The method as recited in claim 1, wherein said core layer has a first region associated with said waveguide core and a second region associated with said vertically aligning means, wherein said method further comprises the step of forming prior to said core layer forming step at least one trough in said lower cladding so that said core layer forming step forms said waveguide core within said lower cladding.

7. The method as recited in claim 1, wherein said core layer forming step further comprises depositing a core layer made of silicon dioxide doped with one or more materials selected from the group consisting of phosphorus (P), germanium (Ge), aluminum (Al), titanium (Ti), tantalum (Ta), arsenic (As)or erbium (Er).

8. The method as recited in claim 1, wherein one or more of said cladding forming steps further comprises using a technique selected from the group consisting of high pressure oxidation (HIPOX), chemical vapor deposition (CVD), sol-gel, sputtering or e-beam evaporation.

9. Apparatus for coupling optical power, said apparatus for use with an optical fiber (26), said apparatus comprising:
a silicon substrate (14) having a surface (34);
a lower cladding (16) carried by at least a portion of a first side of said substrate, said lower cladding having a determinable vertical relationship with respect to said substrate surface;
a waveguide core (18) carried by said lower cladding;
an upper cladding (20) covering said waveguide core and said lower cladding whereby said lower cladding, said waveguide core and said upper cladding form a waveguide on said first side of said substrate; and
a V-groove (24) formed within at least a portion of a second side of said substrate, said V-groove being laterally aligned with said waveguide and having a determinable vertical relationship with respect to said substrate surface so that, when said optical fiber is positioned within said V-groove, said optical fiber is laterally and vertically aligned with said waveguide core.

10. The apparatus as recited in claim 9, wherein said lower cladding has a top surface and is formed within said substrate so that said top surface of said lower cladding is planar with respect to at least a portion of said substrate surface.

11. The apparatus as recited in claim 9, wherein said waveguide core is formed in said lower cladding and said upper cladding is deposited on said lower cladding thereby covering said waveguide core.

12. The apparatus as recited in claim 9, wherein said waveguide core is made from silicon dioxide doped from one or more materials selected from the group consisting of phosphorus (P), germanium (Ge), aluminum (Al), titanium (Ti), tantalum (Ta), arsenic (As) or erbium (Er).

13. The apparatus as recited in claim 9, wherein each of said lower cladding and said upper cladding is made from silicon dioxide doped with one or more materials selected from the group consisting of phosphorus (P), boron (B), fluorine (F) and germanium (Ge).

14. The apparatus as recited in claim 9, wherein said lower cladding further comprises a first layer of silicon dioxide having a thickness of approximately 10-30 microns and a second layer of phosphorus doped silicon dioxide having a thickness in the range of approximately 5-10 microns.

15. The apparatus as recited in claim 9, further comprising means formed in said substrate between said first and second sides for accommodating the vertical alignment of said optical fiber with respect to said waveguide core.
